(19) Europäisches Patentamt
European Patent Office
Office européen des brevets

(11) **EP 1 956 067 A1**

(12) **EUROPEAN PATENT APPLICATION**
published in accordance with Art. 158(3) EPC

(43) Date of publication:
**13.08.2008 Bulletin 2008/33**

(51) Int Cl.:
**C09K 5/04** *(2006.01)* **F25B 1/00** *(2006.01)*

(21) Application number: **06796447.8**

(22) Date of filing: **16.08.2006**

(86) International application number:
**PCT/JP2006/316087**

(87) International publication number:
**WO 2007/060771 (31.05.2007 Gazette 2007/22)**

(84) Designated Contracting States:
**DE FR GB IT**

(30) Priority: **25.11.2005 JP 2005339840**

(71) Applicants:
- **Japan Petroleum Exploration Co. Ltd.**
  **Tokyo 140-0002 (JP)**
- **Showa Tansan Co., Ltd.**
  **Tokyo 101-0061 (JP)**
- **Toyota Tsusho Corporation**
  **Nagoya-shi,**
  **Aichi 450-8575 (JP)**

(72) Inventors:
- **MAIYA, Seijyuro**
  **Tokyo 177-0053 (JP)**

- **NAKAGOME, Osamu**
  **Tokyo 184-0014 (JP)**
- **SUZUKI, Hideyuki**
  **Kawasaki-shi, Kanagawa 213-0015 (JP)**
- **KOTANI, Yasuhisa**
  **Tokyo 154-0016 (JP)**
- **HATANAKA, Toshifumi**
  **Ikoma-gun, Nara 636-0938 (JP)**
- **WADA, Toshihiro**
  **Chiba-shi, Chiba 263-0043 (JP)**

(74) Representative: **Grünecker, Kinkeldey, Stockmair & Schwanhäusser**
**Anwaltssozietät**
**Leopoldstrasse 4**
**80802 München (DE)**

(54) **REFRIGERANT COMPOSITION**

(57) Problems

To provide a refrigerant that is ozone-friendly, exhibiting a very low global warning potential, and that is safe and nontoxic, ensuring high performance, by mixing dimethyl ether with carbon dioxide.

Means for solving problems

There is provided a refrigerant composition for a refrigerator, comprising 10-40% by mole of dimethyl ether and 90-60% by mole of carbon dioxide on the basis of a total number of moles of dimethyl ether and carbon dioxide.

EP 1 956 067 A1

**Description**

Technical Field

The present invention relates to a refrigerant composition containing dimethyl ether and carbon dioxide used for an automotive air conditioner, a heat pomp for a vending machine, industrial/household air conditioners, and the like.

Background Art

Freons (CFC chlorofluorocarbon, HCFC hydrochlorofluorocarbon) have been used as a refrigerant for an automotive air conditioner and the like in all over the world so far, since Freons have excellent refrigerant performance. However, currently, since Freon depletes the ozone layer because of containing chlorine, developed countries including Japan, Europe and the United States completely abolished production of CFC among specific Freons in 1996. Production of HCFC (hydrochlorofluorocarbon), which is the same specific Freon, was also regulated sequentially after 2004, and is planned to be completely abolished in Europe until 2010, and also in other developed countries until 2020.

Alternative Freons (HFC hydrofluorocarbon, PFC perfluorocarbon, and SP6) to the above described specific Freons have zero ozone-depleting potential, low toxicity, incombustibility, satisfactory characteristics and performances, but have problems such as incompatibility with mineral oil and deterioration of lubricity. Particularly, these alternative Freons do not deplete the ozone layer, but have extremely high global warming potential, and thus their use will be completely abolished or largely regulated in the near future, although there is no specific regulation at present and their regulation depends on self-imposed effort by the industry.

Natural refrigerants whose development has recently proceeded, such as carbon dioxide, ammonium, water and air, have characteristics such as zero ozone-depleting potential and almost zero global worming potential; however, they respectively have problems in terms of safety, performance, and convenience. Ammonium has efficiency equivalent to HFC, but it has toxicity, pungent odor, and incompatibility with copper. Water and air are incombustibility and non-toxic, but have extremely low efficiency.

On the other hand, since carbon dioxide has incombustibility and low toxicity, and large sensible heat effect, it has been recently used as an EHP refrigerant for Ecocute and the like for heating and hot water supply. However, carbon dioxide, on the contrary, has small latent heat effect, and thus efficiency thereof is extremely low when used for cooling. Further, when carbon dioxide is used as a refrigerant for an automotive air conditioner, a working pressure in a condenser side of the automotive air conditioner attains the superficial point ($CO_2$ critical pressure: 7.4 MPa, critical temperature: 31°C) at a high pressure of 8 MPa or more, and in order to liquefy this high pressure gas phase refrigerant by the condenser, it is necessary to set the temperature of the refrigerant at 31°C or less, as shown in the Mollier diagram of $CO_2$. However, in summer when an automotive air conditioner and the like are used the most, an outside temperature often exceeds 31°C. Under such an outside temperature condition, since a refrigerant containing carbon dioxide alone is not at all liquefied (condensed) in a condenser, heat release due to condensation cannot occur. That is, only cooling effect due to adiabatic expansion along with a decrease in pressure can be obtained, but no cooling effect due to heat of vaporization can be obtained. Therefore, a cooling cycle has a superficial pressure varying between a sub-critical pressure and the superficial pressure, a coefficient of performance (COP) under cooling conditions is low, and a working pressure of the compressor is extremely high.

In order to prevent this, particular devices are required; for example, water is circulated around a condenser of an automotive air conditioner, a condenser is cooled by rotating with a specific gas for a refrigerator, or a temperature of outside air taken in from a gas cooler is decreased to a temperature sufficiently capable of performing heat exchange. However, if these devices are provided, it is disadvantageous in view of cost.

On the other hand, it has been known that dimethyl ether (DME) has extremely high latent heat effect, and thus is advantageously used for cooling, but since dimethyl ether is flammable, it is not practically used for the safety reason.

Disclosure of the Invention

An object of the present invention is to provide a refrigerant composition for a refrigerator, which has no risk of depleting the ozone layer, small damaging effect on the global worming, is non-toxic, and exhibits excellent cooling performance.

The inventors of the present invention have found that carbon dioxide is dissolved well in dimethyl ether and that a mixed refrigerant of dimethyl ether and carbon dioxide can be used for hot water supply and heating, and describe inventions relating to novel refrigerants comprising a mixed gas of carbon dioxide and dimethyl ether in Japanese Patent Application No. 2004-167210 (filing date of June 4, 2004) and Japanese Patent Application No. 2005-55957 (filing date of March 1, 2005, priority date of June 4, 2004, one other application), respectively. In the present invention, the inventors considered that utilizing the fact that the boiling point of dimethyl ether is -25°C while the boiling point of carbon dioxide is -78.45°C, a decrease of vapor pressure is promoted by mixing dimethyl ether with carbon dioxide, and condensation (liquefaction) in a condenser can proceed, thereby construction of vapor compression cycle (condensation cycle) under the cooling conditions may be possible, and variously studies, and consequently attained to the present invention.

That is, the present invention relates to a refrigerant composition for a refrigerator comprising 10-40% by mole of dimethyl ether and 90-60% by mole of carbon dioxide on the basis of a total number of moles of dimethyl ether and carbon dioxide. Accordingly, the present invention can provide a refrigerant, which does not deplete the ozone layer, has an extremely small global warming potential (GWP of about 3), is non-toxic, and exhibits excellent cooling performance. Further, by using the refrigerant composition of the present invention for an automotive air conditioner and the like, construction of a vapor compression cycle (condensation cycle) under cooling conditions becomes possible, higher COP can be obtained as compared with a refrigerant containing carbon dioxide alone, and at the same time, a working pressure of a compressor can be deceased, which results in exhibiting an advantageous effect such that a specific device for cooling periphery of a condenser, or such as a gas cooler is not necessary, as is necessary for the carbon dioxide refrigerant alone.

Brief Description of the Drawings

Figure 1 is Refrigerant cycle system for an automotive air conditioner.

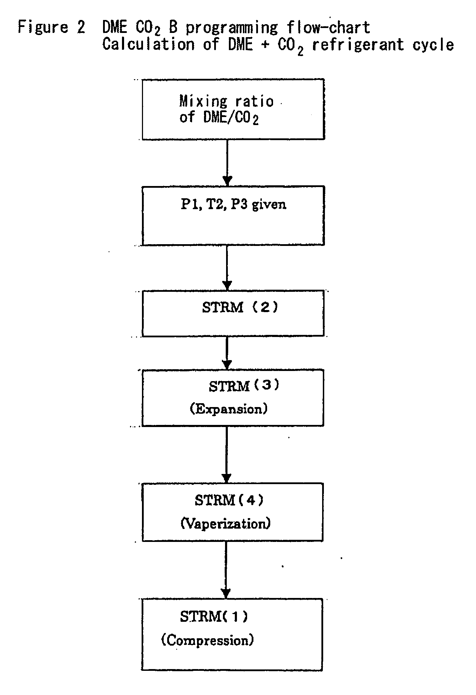

Figure 2 is DME $CO_2$ B program flow-chart.

Best Mode for Carrying Out the Invention

Preferred embodiments of the present invention will be explained in detail hereinbelow.

Dimethyl ether used in the refrigerant composition of the present invention can be obtained by synthesizing dimethyl ether directly from hydrogen and carbon monoxide or indirectly from hydrogen and carbon monoxide through methanol synthesis by utilizing, as raw material, a coal gasification gas, a BOG (boil of gas) of LNG tank, natural gases, by-product gases from a steel plant, oil residues, waste products and biogas.

Carbon dioxide used in the refrigerant composition of the present invention can be obtained by compression, liquefaction and purification of ammonium synthesis gas and by-product gas as the raw material generated from hydrogen manufacturing plant for desulfurization of fuel oil.

A mixing ratio of dimethyl ether and carbon dioxide in the refrigerant composition of the present invention is appropriately determined depending on types of an automotive air conditioner and a refrigerator such as a refrigerator for a vending machine, and the like, in which a refrigerant is used. The refrigerant composition of the present invention contains, on the basis of the total number of moles of dimethyl ether and carbon dioxide, preferably dimethyl ether at 10-40% by moles and carbon dioxide at 90-60% by moles. If a ratio of dimethyl ether is less than 10% by moles, a sufficient coefficient of the performance hereinafter described is not obtained, and characteristics as a refrigerant are inferior. On the other hand, if the ratio of dimethyl ether is more than 40% by moles, since the refrigerant composition is out of a nonflammable range, it is unfavorable on safety reason.

The refrigerant composition of the mixed ratio of the present invention can be obtained, for example, when used in an automotive air conditioner, by filling a predetermined amount of liquid dimethyl ether in a suitable vessel such as a service can depending on its volume from a tank filled with liquid dimethyl ether, subsequently filling a predetermined amount of liquid carbon dioxide thereto from a tank filled with liquid carbon dioxide. Further, after filling the predetermined amount of liquid dimethyl ether in the suitable vessel such as a service can depending on the volume of the automotive air conditioner, the refrigerant composition of the present invention can be prepared by such that carbon dioxide gas is filled into the gas phase part of the vessel and is dissolved and mixed under pressure into dimethyl ether.

The refrigerant composition of the present invention may be composed only of dimethyl ether and carbon dioxide, or may contain other components in addition to the mixed medium. Examples of other components which can be added to the refrigerant composition of the present invention include alcohols such as ethanol.

The principle of a cooling system is based on continuous heat exchange between latent heat that draws heat energy from a peripheral medium and the peripheral medium when a substance (refrigerant) is vaporized. An evaporation temperature of the refrigerant depends on a pressure, if the pressure is decreased, the evaporation temperature also decreases, and thus, a lower temperature can be attained.

On the other hand, the principle of a heating and hot water supply system can be achieved by performing continuous heat exchange with water, air, or the like by drawing heat from periphery of a refrigerant due to evaporation to form a further compressed liquid with a high temperature.

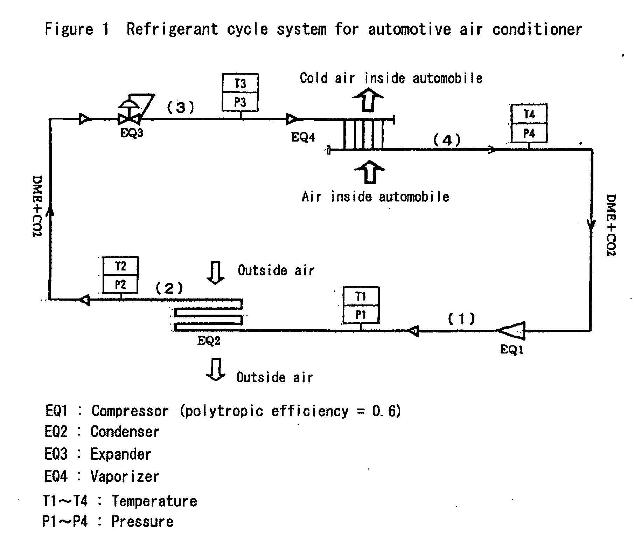

A system for an automotive air conditioning is also based on these principles of the cooling/heating system, which is a refrigerant cycle system composed of a compressor, a condenser, an expander and a vaporizer. As an example of the refrigerant cycle system in which the refrigerant composition of the present invention is used, a non-limiting example of a refrigerant cycle system for an automotive air conditioner is shown in Figure 1. Herein, in cooling conditioning, a refrigerant highly compressed and increased in temperature in a compressor is cooled with external air in a condenser to be a liquid phase. This liquid phase refrigerant is evaporated in a vaporizer via endothermic exchange with air in an automobile to cool the inside of the automobile.

Functions of respective equipments in Figure 1 are described as follows.

· EQ1 Compressor: a cool refrigerant to be a gas in a vaporizer is vacuum-compressed to be a high-temperature and high-pressure gas.
· EQ2 Condenser: the high-temperature and high-pressure gas medium discharged from the compressor is cooled with water or air (external air) and condensed to be a liquid (for heating/hot water supply).
· EQ3 Expander: the high-temperature and high-pressure liquid refrigerant is expanded to be a low-temperature and low-pressure refrigerant.
· EQ4 Vaporizer: the low-temperature and low-pressure refrigerant is brought into contact with peripheral gas around an outlet of the expander to remove heat thereof, and evaporated and vaporized to be a gas (for cooling).

In order to evaluate actual cooling performance of a refrigerant, a numerical model of the above described refrigerant cycle is prepared, and using the general-purpose simulation system for a numerical chemical process, the cooling performance of the refrigerant can be analyzed and evaluated by the known method (e.g. see Miyara, Akio et al., "Effect of heat transfer characteristics of heat exchanger on non-azeotropic mixture refrigerant heat pump cycle," Transactions of the Japanese Association of Refrigeration, 7(1): 65-73, 1990). The general-purpose simulation system for the numerical chemical process stores database of thermodynamic properties of various components, and equilibrium thermodynamic calculation on the interaction of chemical components corresponding to a mechanical engineering function of various systems can be performed.

In the numerical simulation, a system circulating the refrigerant composed of a compressor, a circulator, an expander and a vaporizer is expressed numerically, and the cooling/heating/hot water supply performance is evaluated as a coefficient of performance (COP) by using parameters of outlet pressure of compressor (P1) (hereinafter, abbreviated as "compressor pressure" or "discharge pressure"), outlet temperature of a condenser (T2), temperature of a vaporizer (T3) and concentration of a refrigerant composition component.

$$\text{Cooling COP} = \text{total amount of heat absorption of refrigerant in vaporizer/amount of power of compressor}$$

$$\text{Heating/hot water supply COP} = \text{total amount of exhaust heat of refrigerant in condenser/amount of power of compressor}$$

The present invention can be highly precisely evaluated by applying, preferably as an estimate equation for thermodynamic physical value of refrigerant, regular solution model with respect to dissolution and SRK (Soave-Redlich-Kwong) equation of state with respect to the equation of state, respectively.

Further, physical factors concerning with condensation of a refrigerant are discharge pressure (pressure of a compressor), outlet temperature of a condenser, a mixing ratio of carbon dioxide and dimethyl ether, temperature of peripheral external temperature, and critical temperature retained by a refrigerant. These physical factors are assigned into the above-described SRK state equation to perform numerical simulation, and a condensation ratio (presence or absence of condensation) can be also found.

Herein, as the condition in which the condensation cycle can be formed, it is required that a discharge pressure is a threshold value or more, and a peripheral external temperature is lower than a critical temperature of the refrigerant and an outlet temperature of a condenser. However, the discharge pressure varies depending on a mixing ratio of carbon dioxide and dimethyl ether.

Examples of a refrigerator in which the refrigerant composition of the present invention can be preferably used include an automotive air conditioner, a heat pump for a vending machine, an air conditioner for institutional use and home use, and gas heat pump (GHP) and an electrical heat pump (EHP), but are not limited to these examples. The refrigerant composition of the present invention can be used as it is, is principle, in an automotive air conditioner, a heat pump for a vending machine, an air conditioner for institutional use and home use, GHP and EHP, etc. in which conventional refrigerants such as R22 are used. However, in consideration of physical properties of the refrigerant composition of the present invention, it is further desirable that a mechanical aspect of a condenser, a piston, etc. are improved and designed in conforming of the refrigerant composition of the present invention.

Examples

The present invention will be described with reference to examples hereinbelow in detail, however the present invention is not limited within these

examples.

Solubility test of dimethyl ether/carbon dioxide

In order to know solubility of a mixture system of dimethyl ether (DME) and carbon dioxide ($CO_2$), and in order to obtain coefficient of performance of the mixed refrigerant in the refrigerant cycle system described hereinbelow, a solubility test of $DME/CO_2$ was performed. The test method is as follows.

(1) 300 g of dimethyl ether was encapsulated and sealed in a 500-mL pressure vessel, and weight of the sealed vessel was measured by using electric weighing machine.
(2) The pressure vessel was set in the constant-temperature bath and kept at a constant temperature.
(3) Carbon dioxide was injected by using a booster pump until obtaining a constant pressure.
(4) Weight of the filled carbon dioxide was calculated by weighing before and after filling (d=0.1g).

In the filling, the pressure vessel was shaken up and down for completely mixing $DME/CO_2$, and the test was performed after allowing to stand vertically.
Results obtained are shown in Table 1. As shown in Table 1, a value of K-volume of $CO_2$ and DME is within the range of $0.66 < KDME < 0.80$ and $2.59 < KCO_2 < 3.42$, respectively, including good solubility of carbon dioxide in DME.

Table 1 Solubility test results of $DME/CO_2$

| Case | A | B | C | D |
|---|---|---|---|---|
| Pressure of system | 10.0 | 10.0 | 10.0 | 1.0 |
| Temperature of system (°C) | 10 | 20 | 30 | 40 |
| $ZCO_2$(g-mol) | 1.682 | 1.500 | 0.977 | 1.045 |
| ZDME(g-mol) | 6.522 | 6.522 | 6.522 | 6.522 |
| V(g-mol) | 1.177 | 1.378 | 2.090 | 0.661 |
| L(g-mol) | 7.027 | 6.634 | 5.409 | 6.906 |
| $YCO_2$ (mol%) | 43.2 | 42.9 | 26.3 | 39.0 |
| $XCO_2$ (mol%) | 16.7 | 13.7 | 7.9 | 11.4 |
| $KCO_2$(-) | 2.59 | 3.13 | 3.33 | 3.42 |
| YDME (mol%) | 56.8 | 57.1 | 73.7 | 61.0 |
| XDME (mol%) | 83.7 | 86.3 | 92.1 | 88.6 |
| KDME | 0.68 | 0.66 | 0.80 | 0.69 |
| · $ZCO_2 = V * YCO_2 + L * CO_2$<br>· $ZCO_2 + ZDME = V + L$<br>· $KCO_2 = YCO_2/XCO_2$<br>· $KDME = YDME/XDME$ | | | | |

(First Example)

Coefficient of performance (COP) of the mixed refrigerant of dimethyl ether and carbon dioxide in the refrigerant cycle system shown in Figure 1 was obtained. Simulation using the simulation system for the numerical chemical process was performed by following operation procedure.

Simulation procedure

A quantity of state of stream (1) to (4) (volume, enthalpy, entropy, etc.) in the refrigerant cycle system in Figure 1 was determined by simulation to obtain coefficient of performance (COP) of the following equation.

$$COP = H1/H2$$

H1: total amount of exhaust heat of refrigerant in condenser
H2: amount of power of compressor from (4) to (1)

Condition setting was as follows.

(1) $CO_2$/DME mixed refrigerant

In order to evaluate hot water supply ability of a $CO_2$/DME mixed refrigerant, the discharge pressure of the compressor, the pressure of the vaporizer and the mixing ratio of $CO_2$/DME were used as fluctuating parameter for calculation.
P1 =3.7MPa to 6.8 MPa
P3 = 1.05 MPa to 2.6 MPa
Refrigerant vaporization temperature: around 8°C
Mixing ratio of DME/$CO_2$ (10/90, 12/88, 15/85, 20/80, 30/70: molar ratio) (2) Refrigerant of $CO_2$ alone
For a refrigerant of carbon dioxide alone, it is necessary that an outlet temperature T2 of the condenser is decreased to 31°C or less in this cooling cycle, the heating source for the condenser of an automotive air conditioner is outside air, and in the case where a temperature of the outside air is 31°C or more, the above described condensation cycle is not established. Therefore, this simulation was not performed.

Estimation of gas-liquid physical properties of DME + $CO_2$ mixed system

In the simulation study, the accuracy of the employed estimation model for physical properties is an important factor and a trial examination was performed as follows.
In general, a gas-liquid equilibrium relation is expressed in the following equation.

$$\phi_i P y_i = f_i^{(0)} \gamma_i^{(0)} x_i \times \exp \int_0^P \overline{V_i^L} / RT_{dp}$$

$\phi_i$ : Gas phase Fugacity Coeff.
P: System Pressure
$y_i$ : Gas phase molar fraction
$f_i^{(0)}$ : Liquid phase standard Fugacity
$\gamma_i^{(0)}$ : Activity coefficient of liquid phase
$X_i$ : Liquid phase molar fraction

$\exp \int_0^P \overline{V_i^L} / RT_{dp}$  : Poynting Facter

Points to be considered are following three points.

(1) $\gamma_i^{(0)}$ model for DME
(2) Degree of relative volatility of DME and $CO_2$
(3) Enthalpy and entropy model

Although DME is an oxygen containing low molecular weight compound, since the boiling point of the representative substance, ethanol, is 78°C, whereas that of DME is -25°C, it can be understood that it has no strong polarity as compared with alcohol, aldehyde and ketone groups. Consequently, a regular dissolution model can be applied for $\gamma_i^{(0)}$ of DME.

As obtained from DME/$CO_2$ solubility test data (Table 1), values of K-volume of DME and $CO_2$ are within the range of $0.66 < KDME < 0.80$ and $2.59 < KCO_2 < 3.42$, respectively, including that there is no large difference in volatility between DME and $CO_2$. Consequently, a vapor pressure model can be applied for $f_i^{(0)}$ .

Since the estimated maximum pressure for use in DME + $CO_2$ system with regard to enthalpy and entropy is approximately 10 MPa, SRK (Soave-Redlich-Kwong) equation of state can preferably be employed.

$$P = \frac{RT}{v - b} - \frac{a\left[1 + (0.48 + 1.574w - 0.176w^2)(1 - Tr)^{\frac{1}{2}}\right]^2}{v^2 + bv}$$

$\gamma_i^{(0)}$ : Regular Solution Model
$f_i^{(0)}$ : Vaper Pressure Model
$\phi i$, H, S: SRK equation of State
Poynting Facter : Considered

When pressure of the system becomes high in some degree (several MPa), Poynting factor cannot be negligible, consequently this point was taken into consideration.

Program

The following two programs, A and B were used.

(1) DME $CO_2$ A

Flash calculation under given composition, T (temperature) and P (pressure).
A bubble point was calculated under the given composition and P1 (compressor pressure).
According to this condition, confirmation for an accuracy of gas-liquid equilibrium physical property estimation model and whether total condensation in the condenser can be in sight.

(2) DME $CO_2$ B

Using the above explained simulator, COP of the refrigerant composition containing dimethyl ether and carbon dioxide was obtained as follows.

Example 1

In order to evaluate cooling ability of a dimethyl ether/ carbon dioxide mixed refrigerant, the discharge pressure (P1) of the compressor, the outlet temperature (T2) of the condenser, the pressure (P3) of the vaporizer and the mixing ratio of DME/$CO_2$ were used as fluctuating parameter for calculation to perform a simulation. Herein, an outlet temperature T2 of the condenser was set at 35°C, and a temperature of the vaporizer was set at 4 - 5°C on average. Mixing weight ratios of DME/$CO_2$ with which the simulation was performed are shown in Table 2. Simulation results of cooling characteristics of refrigerant compositions in the mixing ratios are shown in Table 3.

Table 2 Mixing weight ratios of DME/$CO_2$

| Experiments | 1 | 2 | 3 | 4 | 5 | 6 |
|---|---|---|---|---|---|---|
| $CO_2$ | 90 | 88 | 85 | 80 | 70 | 60 |
| DME | 10 | 12 | 15 | 20 | 30 | 40 |

Table 3 Cooling characteristics of DME/$CO_2$ mixed refrigerant composition

| Weight ratios of mixing refrigerants (% by mole) | | Compressor | | Vaporizer | | | COP |
|---|---|---|---|---|---|---|---|
| $CO_2$ (%) | DME (%) | Pressure (MPa) | Temperature (°C) | Pressure (MPa) | Inlet temperature (°C) | Outlet temperature (°C) | |
| 90 (90) | 10 (10) | 6.8 | 113.7 | 2.6 | -3.5 | 11.5 | 2.07 |
| 88 (88) | 12 (12) | 6.75 | 120.6 | 2.45 | -4.3 | 12.9 | 2.06 |
| 85 (85) | 15 (15) | 6.55 | 128.6 | 2.22 | -5.9 | 14.2 | 2.03 |
| 80 (80) | 20 (20) | 5.55 | 125.1 | 1.9 | -4.9 | 15.7 | 1.88 |
| 70 (71) | 30 (29) | 4.3 | 128.3 | 1.35 | -4.5 | 15.1 | 1.57 |
| 60 (61) | 40 (39) | 3.7 | 131.6 | 1.05 | -5.8 | 15.1 | 1.74 |

As obvious from Table 3, the cooling cycle can be established at a critical pressure of $CO_2$ or less in a DME/$CO_2$ mixed refrigerant. Further, when a DME/$CO_2$ mixing ratio is in a nonflammable range (a molar ratio ofDME of 10-12%), even if an outlet temperature of the condenser is 35°C, the compressor can work at a pressure of the compressor about 6.8 MPa, and the COP is 2.0. In addition, as a concentration ofDME in a DME/$CO_2$ mixing ratio becomes large, a working pressure of the compressor radically decreases, and thus, release of the flame retardancy condition makes it possible to obtain an excellent solvent.

**Claims**

1.  A refrigerant composition for a refrigerator comprising 10-40% by mole of dimethyl ether and 90-60% by mole of carbon dioxide on the basis of a total number of moles of dimethyl ether and carbon dioxide.

2.  The refrigerant composition according to claim 1, wherein the refrigerator is an automotive air conditioner, a heat pump for a vending machine or an industrial/household air conditioner.

3.  A method of using the refrigerant composition according to claim 1 in the refrigerator according to claim 2.

## Figure 1  Refrigerant cycle system for automotive air conditioner

EQ1 : Compressor (polytropic efficiency = 0.6)

EQ2 : Condenser

EQ3 : Expander

EQ4 : Vaporizer

T1~T4 : Temperature

P1~P4 : Pressure

Figure 2  DME $CO_2$ B programming flow-chart
Calculation of DME + $CO_2$ refrigerant cycle

<table>
<tr><td colspan="2" align="center">**INTERNATIONAL SEARCH REPORT**</td><td colspan="2">International application No.<br><br>PCT/JP2006/316087</td></tr>
</table>

A. CLASSIFICATION OF SUBJECT MATTER
*C09K5/04*(2006.01)i, *F25B1/00*(2006.01)i

According to International Patent Classification (IPC) or to both national classification and IPC

B. FIELDS SEARCHED

Minimum documentation searched (classification system followed by classification symbols)
C09K5/04, F25B1/00

Documentation searched other than minimum documentation to the extent that such documents are included in the fields searched
| Jitsuyo Shinan Koho | 1922-1996 | Jitsuyo Shinan Toroku Koho | 1996-2006 |
| Kokai Jitsuyo Shinan Koho | 1971-2006 | Toroku Jitsuyo Shinan Koho | 1994-2006 |

Electronic data base consulted during the international search (name of data base and, where practicable, search terms used)
CAplus(STN), REGISTRY(STN), JST7580(JDream2), JSTPlus(JDream2)

C. DOCUMENTS CONSIDERED TO BE RELEVANT

| Category* | Citation of document, with indication, where appropriate, of the relevant passages | Relevant to claim No. |
|---|---|---|
| Y | JP 2000-96071 A  (Nippon Mitsubishi Oil Corp.), 04 April, 2000 (04.04.00), Claim 1; Par. No. [0064] & EP 989179 A1 | 1-3 |
| Y | JP 2000-104085 A  (Nippon Mitsubishi Oil Corp.), 11 April, 2000 (11.04.00), Claim 1; Par. No. [0104] & EP 997519 A1 | 1-3 |
| Y | JP 2001-19944 A  (Matsushita Electric Industrial Co., Ltd.), 23 January, 2001 (23.01.01), Claims 1 to 8 (Family: none) | 1-3 |

| ☒ | Further documents are listed in the continuation of Box C. | ☐ | See patent family annex. |

| * | Special categories of cited documents: | "T" | later document published after the international filing date or priority date and not in conflict with the application but cited to understand the principle or theory underlying the invention |
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>27 September, 2006 (27.09.06) | Date of mailing of the international search report<br>10 October, 2006 (10.10.06) |
| Name and mailing address of the ISA/<br>Japanese Patent Office | Authorized officer |
| Facsimile No. | Telephone No. |

Form PCT/ISA/210 (second sheet) (April 2005)

**INTERNATIONAL SEARCH REPORT**

| International application No. |
| --- |
| PCT/JP2006/316087 |

C (Continuation). DOCUMENTS CONSIDERED TO BE RELEVANT

| Category* | Citation of document, with indication, where appropriate, of the relevant passages | Relevant to claim No. |
| --- | --- | --- |
| Y | JP 2002-235072 A (Matsushita Electric Industrial Co., Ltd.), 23 August, 2002 (23.08.02), Claims 1 to 9 (Family: none) | 1-3 |
| Y | Liu, Hongkui et al, Preparation of refrigerants, Chemical Abstract, Vol.138, No.26, 2003, 138:403608g | 1-3 |
| E,X | JP 2006-241221 A (Japan Petroleum Exploration Co., Ltd.), 14 September, 2006 (14.09.06), Claims 1 to 2 (Family: none) | 1-3 |
| P,X | JP 2005-344057 A (Japan Petroleum Exploration Co., Ltd.), 15 December, 2005 (15.12.05), Claims 1, 3 & WO 2005/118738 A1 | 1-3 |

Form PCT/ISA/210 (continuation of second sheet) (April 2005)

**EP 1 956 067 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004167210 A

- JP 2005055957 A

**Non-patent literature cited in the description**

- **MIYARA, AKIO et al.** Effect of heat transfer characteristics of heat exchanger on non-azeotropic mixture refrigerant heat pump cycle. *Transactions of the Japanese Association of Refrigeration,* 1990, vol. 7 (1), 65-73